**Europäisches Patentamt**

**European Patent Office**

**Office européen des brevets**

(19)

(11) Veröffentlichungsnummer: **0 149 812 B1**

(12) **EUROPÄISCHE PATENTSCHRIFT**

(45) Veröffentlichungstag der Patentschrift: **26.06.91**

(51) Int. Cl.⁵: **B01D 19/04**

(21) Anmeldenummer: **84115711.8**

(22) Anmeldetag: **18.12.84**

(54) **Entschäumer auf Basis von Öl-in-Wasser-Emulsionen.**

(30) Priorität: **19.01.84 DE 3401695**

(43) Veröffentlichungstag der Anmeldung:
**31.07.85 Patentblatt 85/31**

(45) Bekanntmachung des Hinweises auf die
Patenterteilung:
**26.06.91 Patentblatt 91/26**

(84) Benannte Vertragsstaaten:
**AT BE CH DE FR GB IT LI NL SE**

(56) Entgegenhaltungen:
**DE-A- 2 157 033**   **DE-A- 2 225 444**
**DE-B- 2 217 696**   **GB-A- 767 738**
**GB-A- 2 094 330**   **US-A- 3 152 081**
**US-A- 3 166 508**   **US-A- 3 340 193**
**US-A- 3 697 440**

(73) Patentinhaber: **BASF Aktiengesellschaft
Carl-Bosch-Strasse 38
W-6700 Ludwigshafen(DE)**

(72) Erfinder: **Bergold, Wolfram, Dr.
Am Waldrand 26
6900 Heidelberg(DE)**
Erfinder: **Melzer, Jaroslav
Kirchenstrasse 116
6700 Ludwigshafen(DE)**

Rank Xerox (UK) Business Services

**Beschreibung**

Aus der DE-PS 21 57 033 ist ein Verfahren zum Entschäumen wäßriger Systeme mittels Emulsionen bekannt, die $C_{12}$- bis $C_{22}$-Alkanole und/oder $C_{12}$-bis $C_{22}$-Fettsäureester zwei- oder dreiwertiger Alkohole, sowie Paraffinöl und/oder $C_{12}$- bis $C_{22}$-Fettsäuren als Entschäumer sowie an sich bekannte Zusätze grenzflächenaktiver Stoffe als Emulgatoren enthalten. Die emulgierten wasserunlöslichen Stoffe haben eine mittlere Teilchengröße von 4 bis 9 $\mu$m. Die bekannten Entschäumer-Emulsionen haben den Nachteil, daß sie bei der Lagerung aufrahmen und zum Teil sogar so stark verdicken, daß solche Mischungen dann nicht mehr gepumpt werden können.

Der Erfindung liegt die Aufgabe zugrunde, bekannte Entschäumer auf Basis von Öl-in-Wasser-Emulsionen so zu stabilisieren, daß sie auch nach längerer Lagerung noch gepumpt werden können.

Die Aufgabe wird erfindungsgemäß gelöst mit Entschäumern auf Basis von Öl-in-Wasser-Emulsionen, bei denen die Ölphase der Emulsion

(a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder

(b) einen Fettsäureester von $C_{12}$- bis $C_{22}$-Carbonsäuren mit einem ein- bis dreiwertigen $C_1$- bis $C_{18}$-Alkohol und gegebenenfalls

(c) einen Kohlenwasserstoff mit einem Siedepunkt oberhalb von 200° C oder Fettsäuren mit 12 bis 22 Kohlenstoffatomen

enthält, zu 15 bis 60 Gew.% am Aufbau der Emulsion beteiligt ist und eine mittlere Teilchengröße von 0,5 bis 15 $\mu$m hat, wenn die Öl-in-Wasser-Emulsionen 0,05 bis 0,5 Gew.% eines hochmolekularen, wasserlöslichen Homo- oder Copolymerisats von Acrylsäure, Methacrylsäure, Acrylamid oder Methacrylamid als Stabilisator enthalten.

Die Komponente (a) der Öl-in-Wasser-Entschäumeremulsionen sind vor allem natürliche oder synthetische Alkohole oder Alkoholgemische mit 12 bis 26 Kohlenstoffatomen. Beispiele sind Myristylalkohol, Cetylalkohol und Stearylalkohol. Die synthetischen Alkohole, die beispielsweise nach dem Ziegler-Verfahren durch Oxidation von Aluminiumalkylen erhältlich sind sind gesättigte, geradkettige, unverzweigte Alkohole. Synthetische Alkohole werden auch durch Oxosynthese erhalten. Hierbei handelt es sich in der Regel um Alkoholgemische. Als Komponente (a) der Ölphase der Entschäumeremulsionen können außerdem Destillationsrückstände, die bei der Herstellung der vorstehend genannten Alkohole durch Oxosynthese oder nach dem Ziegler-Verfahren erhalten werden, verwendet werden. Als Bestandteil (a) der Ölphase der Entschäumeremulsionen eignen sich auch alkoxylierte Destillationsrückstände, die bei dem oben genannten Verfahren zur Herstellung von höheren Alkoholen durch Oxosynthese oder nach dem Ziegler-Verfahren herstellbar sind. Man erhält die oxalkylierten Destillationsrückstände dadurch, daß man die oben genannten Destillationsrückstände mit Ethylenoxid oder mit Propylenoxid oder auch mit einer Mischung aus Ethylenoxid und Propylenoxid umsetzt. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (b) der Ölphase der Entschäumer-Emulsionen verwendet man Fettsäureester von $C_{12}$- bis $C_{22}$-Carbonsäuren mit einem ein- bis dreiwertigen $C_1$- bis $C_{18}$-Alkohol. Die Fettsäuren, die den Estern zugrundeliegen, sind beispielsweise Laurylsäure, Myristinsäure, Palmitinsäure, Stearinsäure, Arachinsäure und Behensäure Vorzugsweise verwendet man Palmitinsäure oder Stearinsäure. Man kann einwertige $C_1$- bis $C_{18}$-Alkohole zur Veresterung der genannten Carbonsäuren verwenden, z.B. Methanol, Ethanol, Propanol, Butanol, Hexanol, Decanol und Stearylalkohol als auch zweiwertige Alkohole, wie Ethylenglykol oder dreiwertige Alkohole wie Glycerin. Die mehrwertigen Alkohole können vollständig oder teilweise verestert sein.

Die Ölphase der Entschäumeremulsionen enthält eine Verbindung der Komponente (a) oder (b) oder auch Mischungen aus den Komponenten (a) und (b).

Die Komponenten (a) und können in jedem beliebigen Verhältnis zur Herstellung der Entschäumer verwendet werden. In der Praxis haben sich beispielsweise Mischungen aus (a) und (b) bewährt, die 40 bis 60 % (a) und 60 bis 40 Gew.% (b) enthalten.

Die Ölphase der Emulsion kann zusätzlich noch von einer weiteren Klasse wasserunlöslicher Verbindungen gebildet werden, die im folgenden als Komponente (c) bezeichnet wird. Die Verbindungen der Komponente (c) können bis zu 50 Gew.% am Aufbau der Ölphase der Entschäumeremulsionen beteiligt sein. Sie können entweder einer Mischung aus den Komponenten (a) und (b) oder jeder der unter (a) oder (b) genannten Verbindungen zugesetzt werden. Als Komponente (c) eignen sich Kohlenwasserstoffe mit einem Siedepunkt von mehr als 200° C und einem Stockpunkt unter 0° C oder Fettsäuren mit 12 bis 22 Kohlenstoffatomen. Vorzugsweise eignen sich als kohlenwasserstoffe Paraffinöle, wie die im Handel üblichen Paraffingemisch, die auch als Weißöl bezeichnet werden. Als Komponente (c) kommen außerdem Fettsäuren in Betracht, die den Fettsäureestern der Komponente (b) zugrunde liegen, nämlich Fettsäuren mit einer Kohlenstoffzahl von 12 bis 22.

Zur Herstellung der Öl-in-Wasser-Emlsionen verwendet man die üblicherweise dafür in Betracht kommenden grenzflächenaktiven Stoffe, die einen HLB-Wert von mehr als 6 haben. Es handelt sich bei diesen grenzflächenaktiven Stoffen um Öl-in-Wasser-Emulgatoren bzw. um typische Netzmittel. Von den grenzflächenaktiven Stoffen kann man anionische, kationische oder nichtionische Verbindungen verwenden. Bevorzugt werden anionische oder nichtionische bzw. Mischungen aus anionischen und nichtionischen grenzflächenaktiven Stoffen eingesetzt. Stoffe der genannten Art sind beispielsweise Natrium- oder Ammoniumsalze höherer Fettsäuren, wie Ammoniumoleat oder -stearat, oxalkylierte Alkylphenole, wie Nonylphenyl oder Isooctylphenol, die im Molverhältnis 1 : 2 bis 50 mit Ethylenoxid umgesetzt werden, oxethylierte ungesättigte Öle, z.B. die Reaktionsprodukte aus einem Mol Ricinusöl und 30 bis 40 Mol Ethylenoxid oder die Umsetzungsprodukte aus einem Mol Spermölalkohol mit 60 bis 80 Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen. 100 Gewichtsteile der Öl-in-Wasser-Emulsion enthalten üblicherweise 0,5 bis 5 Gewichtsteile eines Emulgators oder eines Emulgatorgemisches.

Die Ölphase der Emulsionen ist zu 15 bis 60 Gew.% am Aufbau der Emulsion beteiligt und hat eine mittlere Teilchengröße von 0,5 bis 15 $\mu$m. Solche Emulsionen sind bekannt. Sie werden durch Emulgieren von 15 bis 60 Gewichtsteilen der Ölphase in 85 bis 40 Gewichtsteilen Wasser unter Verwendung handelsüblicher Vorrichtungen, z.B. Dispergatoren, hergestellt. Sofern eine Komponente der Ölphase bei der jeweiligen Arbeitstemperatur fest ist, wird sie zunächst aufgeschmolzen und dann mit den anderen Komponenten vermischt. Die Bildung der Öl-in-Wasser-Emulsionen kann bei Raumtemperatur, als auch bei höheren Temperaturen erfolgen, z.B. in dem Temperaturbereich von 60 bis 100°C.

Die oben beschriebenen Öl-in-Wasser-Emulsionen werden erfindungsgemäß stabilisiert, indem man, bezogen auf die Emulsion, 0,05 bis 0,5, vorzugsweise 0,09 bis 0,2 Gew.% eines hochmolekularen, wasserlöslichen Homo- oder Copolymerisats von Acrylsäure, Methacrylsäure, Acrylamid oder Methacrylamid einarbeitet. Die Zugabe des Stabilisators geschieht vorzugsweise während der Herstellung der Emulsion. Man kann jedoch auch eine bereits hergestellte Emulsion stabilisieren, indem man ihr eines der in Betracht kommenden Polymerisate oder eine Mischung zusetzt. In diesem Fall verwendet man vorzugsweise Wasser-in-Öl-Dispersionen der genannten Polymerisate, die sich in Gegenwart der in den Emulsionen enthaltenen Netzmittel sehr leicht homogen in der Entschäumeremulsion verteilen lassen. Als Stabilisatoren kommen Homopolymerisate in Betracht, z.B. die Homopolymerisate von Acrylsäure, Methacrylsäure, Acrylamid und Methacrylamid. Man kann auch Mischungen aus zwei verschiedenen Homopolymerisaten verwenden, z.B. Homopolymerisate der Acrylsäure und des Acrylamids. Geeignete Copolymerisate enthalten beispielsweise 95 bis 30 Gew.% Acrylamid oder Methacrylamid und 5 bis 70 Gew.% Acrylsäure oder Methacrylsäure. Diese Copolymerisate können bis zu 10 Gew.% weitere ethylenisch ungesättigte Monomere einpolymerisiert enthalten, z.B. Acrylsäureester oder Methacrylsäureester, Acrylnitril oder Vinylacetat. Außerdem kommen als Stabilisatoren Copolymerisate aus 40 bis 90 Gew.% Acrylsäure oder Methacrylsäure und 60 bis 10 Gew.% eines Acrylsäure- oder Methacrylsäureesters eines Alkohols mit 1 bis 4 Kohlenstoffatomen in Betracht. Auch diese Copolymerisate können durch Einpolymerisieren von anderen ethylenisch ungesättigten Monomeren, z.B. Acrylamid oder Methacrylamid, Vinylacetat, Vinylpropionat, Acrylnitril, Methacrylnitril oder Hydroxyalkylacrylaten in einer Menge bis zu etwa 20 Gew.% modifiziert sein. Die genannten Homo- und Copolymerisate von Acrylsäure, Methacrylsäure, Acrylamid und Methacrylamid haben ein hohes Molekulargewicht, das beispielsweise mit Hilfe des K-Wertes nach Fikentscher charakterisiert werden kann. Die K-Werte liegen oberhalb 160, vorzugsweise in dem Bereich von 170 bis 290. Die hochmolekularen Homo- und Copolymerisate sind wasserlöslich und werden in einer Menge von 0,05 bis 0,5, vorzugsweise 0,1 bis 0,3 Gew.%, bezogen auf die Entschäumeremulsion, als Mittel zur Stabilisierung von Entschäumern auf Basis von Öl-in-Wasser-Emulsionen verwendet.

Die Entschäumeremulsionen haben unmittelbar nach der Herstellung eine Viskosität in dem Bereich von 300 bis 700 mPas. Nach einer 6-monatigen Lagerung steigt die Viskosität auf etwa 2000 bis 3000 mPas an. Die Emulsionen rahmen jedoch nicht auf, sie sind gießbar, können gerührt und gepumpt werden. Die Verdickungsneigung der stabilisierten Entschäumer-Emulsionen ist gegenüber den bekannten, nichtstabilisierten Entschäumer-Emulsionen überraschend stark verzögert. Die Wirksamkeit der Entschäumer bleibt auch nach der Stabilisierung erhalten.

Zur Entschäumung von wäßrigen Systemen werden die oben beschriebenen stabilisierten Öl-in-Wasser-Emulsionen wäßrigen Systemen, die entschäumt werden sollen, in einer solchen Menge zugesetzt, daß auf 100 Gewichtsteile einer schaumbildenden Substanz etwa 0,02 bis 0,5, vorzugsweise 0,05 bis 0,3 Teile des Entschäumers kommen. Die erfindungsgemäß stabilisierten Entschäumer werden beispielsweise bei der Herstellung von Papier, in Papierstreichfarben, der Nahrungsmittelindustrie, der Stärkeindustrie, in Kläranlagen und bei der Sulfitzellstoffkochung eingesetzt. Wie die bekannten Entschäumer sind auch die stabilisierten Entschäumer sowohl sauren als auch im alkalischen pH-Bereich verwendbar.

Die in den Beispielen angegebenen Teile sind Gewichtsteile, die Prozentangaben beziehen sich auf das Gewicht der Stoffe. Die K-Werte der Polymerisate wurden nach H. Fikentscher, Cellulosechemie 13, 58-64 und 71-74 (1932), bei einer Temperatur von 20° C in 5 %igen wäßrigen Kochsalzlösungen bestimmt; dabei bedeutet K = k . $10^3$. Die mittlere Teilchengröße der in Wasser emulgierten Teilchen der Ölphase wurde mit einem Coulter Counter bestimmt.

Beispiel 1

In einem Dispergator wurde eine Öl-in-Wasser-Entschäumer-Emulsion hergestellt, deren Ölphase zu 32 Gew.% am Aufbau der Emulsion beteiligt war und die eine mittlere Teilchengröße von 3 bis 5 $\mu$m hatte. Die Ölphase bestand aus folgenden Komponenten:
14 Teilen Glycerintriester von $C_{16}$- bis $C_{18}$-Fettsäuren
10 Teilen eines Fettalkoholgemisches von $C_{16}$- bis $C_{20}$-Alkoholen
6 Teilen Mineralöl
2 Teilen Emulgator (Anlagerungsprodukt von 25 Mol Ethylenoxid an 1 Mol Isooctylphenol wurde mit Schwefelsäure zum Schwefelsäurehalbester umgesetzt)
0,15 Teile eines Copolymerisates aus 70 % Acrylamid und 30 % Acrylsäure (K-Wert 270).
68 Teile Wasser und der oben angegebene Emulgator wurden vorgelegt und danach die übrigen Bestandteile zugefügt. Zum Schluß gab man wäßrige Natronlauge zu, um den p-Wert der Emulsion auf 9 einzustellen. Man erhielt eine Öl-in-Wasser-Emulsion, die bei einer Temperatur von 20° C unmittelbar nach der Herstellung eine Viskosität von 450 mPa.s hatte.
Um die Stabilität der Emulsion zu prüfen, wurde eine Probe in einer laborzentrifuge 10 Min. lang einer Drehzahl von 3000 U/min unterworfen. Anschließend wurde die Menge des Wassers bestimmt, die sich dabei abgesetzt hatte. Sie betrug 3 %, bezogen auf die Öl-in-Wasser-Emulsion.

Vergleichsbeispiel 1

Das Beispiel 1 wurde mit der Ausnahme wiederholt, daß der Stabilisator (Copolerisat aus 70 % Acrylamid und 30 % Acrylsäure) fortgelassen wurde. Die Viskosität der Emulsion betrug nach der Herstellung 400 mPa.s. Bei der Prüfung der Stabilität der Emulsion in der laborzentrifuge unter den in Beispiel 1 angegebenen Bedingungen betrug die Menge des abgesetzten Wassers 34 %, bezogen auf die Öl-in-Wasser-Emulsion 34 %.

Beispiel 2

In einem Dispergator wurden 70 Teile Wasser und 2 Teile eines Emulgators (Additionsprodukt von 25 Mol Ethylenoxid an 1 Mol Isooctylphenol, verestert mit Schwefelsäure zum entsprechenden Schwefelsäurehalbester) vorgelegt. Man fügte dann
16 Teile eines Fettalkoholgemisches von $C_{16}$- und $C_{18}$-Alkoholen
5 Teile Mineralöl
11 Teile eines Destillationsrückstands aus der Oxosynthese und 0,6 Teile eines Copolymerisates aus 60 % Acrylamid und 40 % Acrylsäure (K-Wert 250) zu. Die Komponenten wurden bei einer Temperatur von 90° C homogenisiert. Man erhielt eine Öl-in-Wasser-Entschäumer-Emulsion, deren organische Phase eine Teilchengröße von 3 bis 8 $\mu$m hatte. Die Viskosität der Entschäumer-Emulsion betrug unmittelbar nach der Herstellung 500 mPa.s.

Vergleichsbeispiel 2

Das Beispiel 2 wurde mit der Ausnahme wiederholt, daß das als Stabilisierungsmittel verwendete Copolymerisat aus Acrylamid und Acrylsäure fortgelassen wurde. Man erhielt eine Öl-in-Wasser-Emulsion, die bei einer Temperatur von 20° C unmittelbar nach der Herstellung eine Viskosität von 400 mPa.s hatte. Die Teilchengröße der organischen Phase betrug 3 bis 8 $\mu$m Bei der Prüfung der Stabilität nach der im Beispiel 1 angegebenen Methode wurde eine Aufrahmung von 35 % gemessen.

Beispiel 3

In einem Dispergator wurden 67 Teile Wasser und 2 Teile eines Emulgators (Anlagerungsprodukt von 40 Mol Ethylenoxid an 1 Mol Ricinusöl) vorgelegt und mit
24 Teilen einer $C_{16}$- bis $C_{18}$-Alkoholfraktion
10 Teilen Rindertalg und
0,6 Teilen einer 50 %igen Wasser-in-Öl-Emulsion eines Copolymerisates aus 60 % Acrylamid und 40 % Acrylsäure (K-Wert 260) zu einer Öl-in-Wasser-Emulsion verarbeitet. Nach dem Homogenisieren bei einer Temperatur von 80° C erhielt man eine stabile Öl-in-Wasser-Emulsion, deren organische Teilchen eine mittlere Teilchengröße von 4 bis 10

μm hatten. Die Viskosität der Emulsion betrug bei einer Temperatur von 20°C unmittelbar nach der Herstellung 800 mPa.s und stieg nach einer Lagerung von 6 Monaten auf einen Wert von 2000 mPa.s an. Die Emulsion war nach dieser Zeit noch pumpbar.

Vergleichsbeispiel 3

Das Beispiel 3 wurde mit der Ausnahme wiederholt, daß man den Stabilisator (Copolymerisat aus Acrylamid und Acrylsäure) fortließ. Die so erhaltene Öl-in-Wasser-Emulsion hatte eine mittlere Teilchengröße der organischen Phase von 4 bis 10 μm und bei einer Temperatur von 20°C unmittelbar nach der Herstellung eine Viskosität von 700 mPa.s. Nach einer Lagerung von 6 Monaten stieg die Viskosität auf mehr als 10000 mPa.s an. Diese Mischung konnte nicht mehr gepumpt werden.

**Ansprüche**

1. Entschäumer auf Basis von Öl-in-Wasser-Emulsionen, bei denen die Ölphase der Emulsionen
   (a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder
   (b) einen Fettsäureester von $C_{12}$- bis $C_{22}$-Carbonsäuren mit einem ein- bis dreiwertigen $C_1$- bis $C_{18}$-Alkohol und gegebenenfalls
   (c) einen Kohlenwasserstoff mit einem Siedepunkt oberhalb von 200°C oder Fettsäuren mit 12 bis 22 Kohlenstoffatomen
   enthält, zu 15 bis 60 Gew.% am Aufbau der Emulsion beteiligt ist und eine mittlere Teilchengröße von 0,5 bis 15 μm hat, dadurch gekennzeichnet, daß die Öl-in-Wasser-Emulsionen 0,05 bis 0,5 Gew.% eines hochmolekularen, wasserlöslichen Homo- oder Copolymerisats von Acrylsäure, Methacrylsäure, Acrylamid oder Methacrylamid als Stabilisator enthalten.

2. Entschäumer nach Anspruch 1, dadurch gekennzeichnet, daß die Öl-in-Wasser-Emulsionen 0,01 bis 0,3 Gew.% eines Homo- oder Copolymerisats von Acrylsäure, Methacrylsäure, Acrylamid oder Methacrylamid enthalten.

3. Entschäumer nach Anspruch 1, dadurch gekennzeichnet, daß die Öl-in-Wasser-Emulsionen 0,1 bis 0,3 Gew.% eines Copolymerisates aus 95 bis 30 Gew.% Acrylamid oder Methacrylamid und 5 bis 70 Gew.% Acrylsäure oder Methacrylsäure enthalten.

4. Entschäumer nach Anspruch 3, dadurch gekennzeichnet, daß die Öl-in-Wasser-Emulsionen ein Copolymerisat aus 40 bis 90 Gew.% Acrylsäure oder Methacrylsäure und 60 bis 10 Gew.% eines Acrylsäure- oder Methacrylsäureesters eines Alkohols mit 1 bis 4 Kohlenstoffatomen enthalten.

5. Verwendung von hochmolekularen, wasserlöslichen Homo- und Copolymerisaten von Acrylsäure, Methacrylsäure, Acrylamid und Methacrylamid in einer Menge von 0,05 bis 0,5 Gew.% als Mittel zur Stabilisierung von Entschäumern auf Basis von Öl-in-Wasser-Emulsionen.

**Claims**

1. An antifoam based on an oil-in-water emulsion in which the oil phase of the emulsion contains
   (a) a $C_{12}$-$C_{26}$-alcohol, a distillation residue which is obtained in the preparation of alcohols having a fairly high carbon number by an oxosynthesis or by the Ziegler process and which may furthermore be oxalkylated, and/or
   (b) a fatty acid ester of a $C_{12}$-$C_{22}$-carboxylic acid with a monohydric, dihydric or trihydric $C_1$-$C_{18}$-alcohol, with or without
   (c) a hydrocarbon having a boiling point above 200°C or a fatty acid of 12 to 22 carbon atoms,
   constitutes from 15 to 60 % by weight of the emulsion and has a mean droplet size of from 0.5 to 15 μm, wherein the oil-in-water emulsion contains, as a stabilizer, from 0.05 to 0.5 % by weight of a high molecular weight water-soluble homopolymer or copolymer of acrylic acid, methacrylic acid, acrylamide or methacrylamide.

2. An antifoam as claimed in claim 1, wherein the oil-in-water emulsion contains from 0.01 to 0.3% by weight of a homopolymer or copolymer of acrylic acid, methacrylic acid, acrylamide or methacrylamide.

3. An antifoam as claimed in claim 1, wherein the oil-in-water emulsion contains from 0.1 to 0.3 % by weight of a copolymer of from 95 to 30 % by weight of acrylamide or methacrylamide and from 5 to 70 % by weight of acrylic acid or methacrylic acid.

4. An antifoam as claimed in claim 3, wherein the oil-in-water emulsion contains a copolymer of from 40 to 90 % by weight of acrylic acid or methacrylic acid and from 60 to 10 % by weight of an acrylate or methacrylate of an alcohol of 1 to 4 carbon atoms.

5. Use of a high molecular weight water-soluble homopolymer or copolymer of acrylic acid, methacrylic acid, acrylamide and methacrylamide in an amount of from 0.05 to 0.5 % by weight as an agent for stabilizing antifoams based on an oil-in-water emulsion.

**Revendications**

1. **Agents** antimousse à base d'émulsions huile-dans-eau, dans lesquels l'oléophase ou phase huileuse des émulsions contient

   (a) un alcool en $C_{12}$ à $C_{26}$, des résidus de distillation, que l'on obtient au cours de la préparation d'alcools à nombre d'atomes de carbone élevé par oxosynthese ou selon le procédé de Ziegler et qui sont éventuellement alcoxylés et/ou
   (b) un ester d'acide gras d'acides en $C_{12}$ à $C_{22}$ avec un alcool en $C_1$ à $C_{18}$ mono à trihydroxylé et, éventuellement,
   (c) un hydrocarbure possédant un point d'ébullition supérieur à 200 ou des acides gras qui comportent de 12 à 22 atomes de carbone,

   qui participe pour 15 à 60% en poids à la constitution de l'émulsion et possède un calibre moyen des particules de 0,5 à 15 $\mu$m, caractérisés en ce que les émulsions huile-dans-eau contiennent de 0,05 à 0,5% en poids d'un homopolymère ou d'un copolymère de masse moléculaire élevée, soluble dans l'eau, de l'acide acrylique, de l'acide méthacrylique, de l'acrylamide ou du méthacrylamide, à titre de stabilisant.

2. Agents antimousse selon la revendication 1, caractérisés en ce que les émulsions huile-dans-eau contiennent de 0,01 à 0,3% d'un homopolymère ou d'un copolymère de l'acide acrylique, de l'acide méthacrylique, de l'acrylamide ou du méthacrylamide.

3. Agents antimousse selon la revendication 1, caractérisés en ce que les émulsions eau-dans-huile contiennent de 0,1 à 0,3% d'un copolymère de 95 à 30% en poids d'acrylamide ou de méthacrylamide et de 5 à 70% en poids de l'acide acrylique ou de l'acide méthacrylique.

4. Agents antimousse selon la revendication 3, caractérisés en ce que les émulsions huile-dans-eau contiennent un copolymère de 40 à 90% en poids d'acide acrylique ou d'acide méthacrylique et de 60 à 10% en poids d'un ester de l'acide acrylique ou de l'acide méthacrylique d'un alcool qui comporte de 1 à 4 atomes de carbone.

5. Utilisation de copolymères et d'homopolymères, de masse moléculaire élevée , solubles dans l'eau, de l' acide acrylique, de l'acide méthacrylique, de l'acrylamide et du méthacrylamide en une proportion de 0,05 à 0,5% en poids, à titre d'agents de stabilisation d'agents antimousse à base d'émulsions huile-dans-eau.